Europäisches Patentamt

European Patent Office

Office européen des brevets

(19)

(11) Numéro de publication : **0 352 163 B1**

## (12) FASCICULE DE BREVET EUROPEEN

(45) Date de publication du fascicule du brevet :
**09.09.92 Bulletin 92/37**

(51) Int. Cl.$^5$ : **B62D 55/108**, F16F 3/10,
F16F 9/42

(21) Numéro de dépôt : **89401927.2**

(22) Date de dépôt : **05.07.89**

(54) **Dispositif de suspension élastique et amortie d'une charge, notamment pour véhicule.**

(30) Priorité : **12.07.88 FR 8809484**

(43) Date de publication de la demande :
**24.01.90 Bulletin 90/04**

(45) Mention de la délivrance du brevet :
**09.09.92 Bulletin 92/37**

(84) Etats contractants désignés :
**CH DE ES GB IT LI**

(56) Documents cités :
**FR-A- 835 925**
**FR-A- 858 815**
**US-A- 2 714 517**
**US-A- 2 977 109**
**US-A- 4 254 970**

(73) Titulaire : **S.A.M.M.- Société d'Applications
des Machines Motrices
Chemin de la Malmaison
F-91570 Bièvres (FR)**
Titulaire : **ALKAN
Rue du 8 Mai 1945
F-94460 Valenton (FR)**

(72) Inventeur : **Joseph, Philippe
Quartier Le Degay - Loriol du Comtat
F-84200 Carpentras (FR)**
Inventeur : **Mattei, Jean-Pierre
11 bis rue Chevallier
F-94210 La Varenne (FR)**

(74) Mandataire : **Martin, Jean-Paul et al
c/o CABINET LAVOIX 2, Place d'Estienne
d'Orves
F-75441 Paris Cedex 09 (FR)**

## Description

La présente invention a pour objet un dispositif de suspension élastique et amortie d'une charge. Ce dispositif intéresse donc d'une manière générale tous les cas où, dans l'industrie mécanique, une liaison élastique et amortie entre deux éléments est nécessaire.

Cependant, ce dispositif concerne principalement la suspension de tous véhicules à roues ou à chenilles. Il peut cependant s'appliquer également à l'isolement élastique entre un élément et un support relativement à des secousses ou à des vibrations, par exemple pour le maintien d'instruments de mesure fragiles.

Il est connu, dans ces divers domaines, d'utiliser simultanément l'élasticité des métaux ou d'autres corps à haut module élastique, et l'amortissement interne d'élastomères déformables à bas module élastique. (Par haut module on entend jusqu'à 200.000 mégapascals environ, et par bas module 30 à 100 mégapascals environ). Par exemple, on emploie ainsi des ressorts à boudins moulés dans des tubes en caoutchouc pour des suspensions à déplacements linéaires (FR-A-835 925 et 858 815).

Ces réalisations connues présentent les inconvénients suivants : d'une part elles nécessitent des systèmes mécaniques annexes (tringleries) pour assurer la cinématique de la suspension. D'autre part, elles n'ont pas de moyens de dissipation de l'énergie calorifique, ce qui restreint leurs possibilités d'utilisation tout terrain.

L'invention a pour but de réaliser un dispositif de suspension dans lequel ces inconvénients sont éliminés.

Le dispositif de suspension élastique et amortie visé par l'invention, utilisable en particulier dans un véhicule, est du type comportant un bras de support d'une charge, articulé autour d'un axe porteur, ainsi que des moyens élastiques coopérant avec ce bras , qui comprennent une lame élastique à haut module élastique formant une spirale, autour d'un axe parallèle à l'axe d'oscillation, ainsi qu'une bande d'amortissement en matériau déformable à bas module élastique et éventuellement compressible, interposé entre deux spires consécutives de la lame, cette dernière et la bande d'amortissement étant logées dans un carter étanche du bras oscillant.

Suivant l'invention, le dispositif est conforme à la partie caractérisante de la revendication 1.

L'énergie calorifique peut ainsi être rapidement dissipée, ce qui permet l'utilisation tout terrain d'un véhicule équipé de cette suspension.

La lame élastique travaille en flexion, tandis que la bande d'amortissement, de préférence en élastomère, associée à cette lame, présente un important amortissement interne et travaille en compression ainsi qu'en cisaillement .

Un tel élément de suspension est entièrement autonome et ne nécessite, par conséquent, aucun système mécanique annexe.

Suivant d'autres caractéristiques de l'invention :
– Des canaux annulaires libres sont ménagés dans la bande d'amortissement.
– La bande d'amortissement contient des moyens de conduction thermique, comportant par exemple un ressort en spirale noyé dans le matériau déformable, appliqué contre une face concave de la lame élastique, placé de préférence en regard des canaux annulaires libres et coopérant avec la lame pour supporter la charge.
– Les moyens de conduction thermique comprennent également une plaque métallique en contact avec la lame et/ou avec la bande d'amortissement.
– La lame élastique est logée dans une virole dans laquelle est ménagée une ouverture de sortie de l'extrémité externe de la lame, et qui est garnie intérieurement d'un matelas en élastomère.
– L'extrémité interne de la lame est repliée en une boucle qui entoure une cheville traversant le bras et fixée à ce dernier, et son extrémité interne est fixée à un tourillon traversant le bras et formant l'axe porteur.

L'invention sera maintenant décrite en référence aux dessins annexés qui en illustrent un mode de réalisation à titre d'exemple non limitatif.

La figure 1 est une vue en coupe suivant 1/1 de la figure 2 d'un mode de réalisation du dispositif de suspension selon l'invention.

La figure 2 est une vue en coupe et élévation partielle suivant 2/2 de la figure 1.

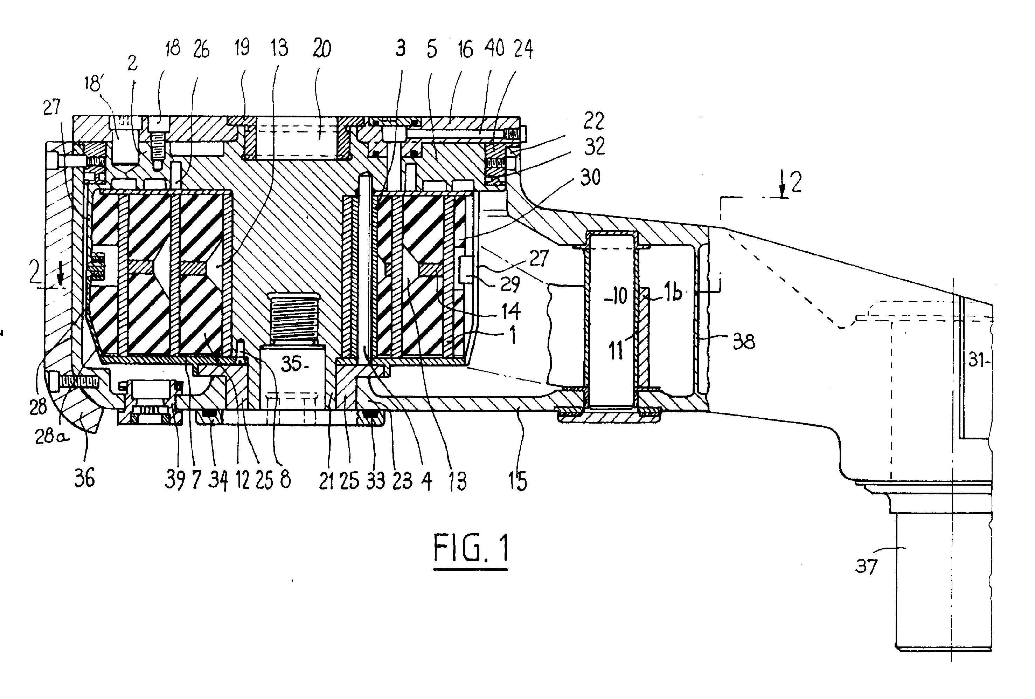

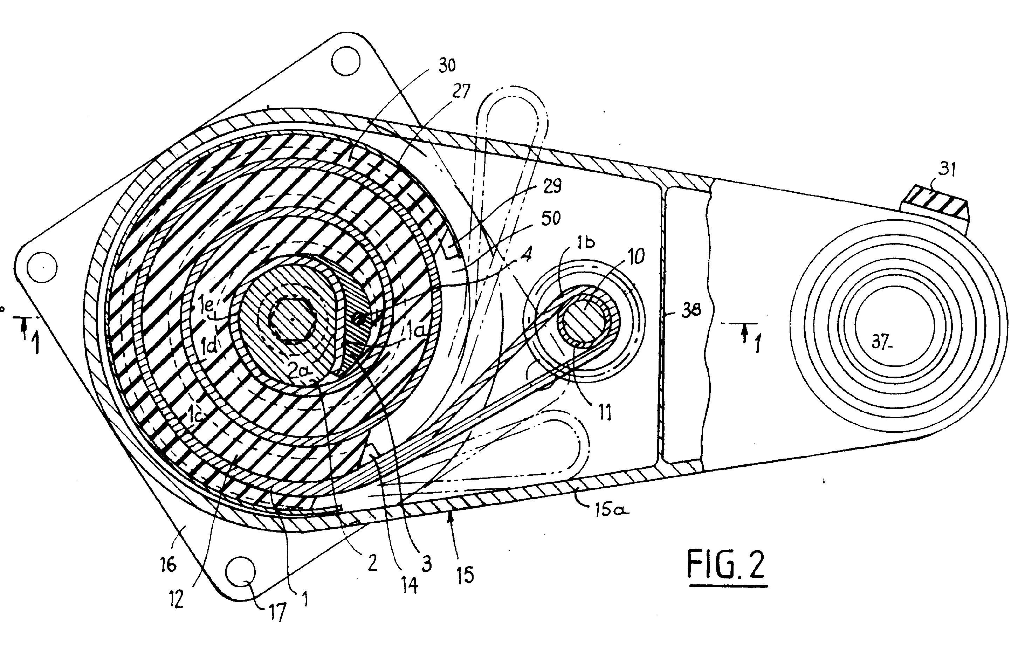

Le dispositif de suspension élastique et amortie représenté aux Fig. 1 et 2, destiné notamment à un véhicule à roues ou à chenilles, comporte un bras 15 de support d'une charge non représentée, supportée par la suspension, par exemple une roue ou un galet de chenille monté sur un moyeu terminal 37. Le bras 15 est articulé autour d'un tourillon 2 fixé à un châssis non représenté et formant l'axe porteur de la suspension.

Le dispositif comprend également des moyens élastiques associés au bras 15 et qui comportent, d'une part une lame élastique 1 formant une spirale autour de l'axe porteur 2, et d'autre part une bande d'amortissement 12 en matériau élastomère, de préférence mais non nécessairement compressible, interposée entre deux spires consécutives (1c-1d, 1d-1e) de la lame 1, le nombre de spires de celle-ci pouvant varier.

L'extrémité interne 1a de la lame spirale 1 est fixée rigidement à l'axe porteur 2 tandis que son extrémité externe 1b est mécaniquement solidaire du bras 15. Ainsi, dans l'exemple décrit la fixation de l'extrémité 1a au tourillon 2 comporte un talon 3 retenu par une broche transversale 4 traversant un épaulement 5 du tourillon 2, et une plaque 7 fixée à ce dernier par des vis 8, entre le talon 3 et un méplat 2a du tourillon 2.

Son extrémité externe 1b peut être par exemple repliée en une boucle qui entoure une cheville 10 traversant le bras 15 et fixée à ce dernier. Cette cheville 10 peut être éventuellement complétée par une douille anti-friction 11 et reçoit l'effort de la suspension du véhicule, si le dispositif est monté sur un véhicule.

La bande élastique 12 est disposée entre les parties sensiblement équidistantes des spires 1c, 1d, 1e de la lame 1 et remplit sensiblement l'espace entre ces spires. La bande 12 peut être collée à la face convexe et/ou à la face concave de chaque spire.

La lame élastique 1 est logée dans une virole 27,28 dans laquelle est ménagée une ouverture 50 de sortie de l'extrémité externe 1b de la lame 1, et qui est garnie intérieurement d'un matelas 30 en élastomère. La virole est ici constituée pour une moitié, par un prolongement 27 du tourillon 2, et pour l'autre moitié par un prolongement 28 de la plaque 7, ce prolongement comportant une partie conique 28a rétrécie pour faciliter l'introduction de l'ensemble élastique et du tourillon 2 à l'intérieur du bras 15. Cette introduction est également facilitée par un déport transversal (voir Fig.1) de l'extrémité externe 1a de la lame 1. Celle-ci se prolonge à partir de la spirale 1c à l'extérieur de la virole 27, 28 à travers l'ouverture 50, qui permet au bras 15 d'effectuer une oscillation d'amplitude maximale dont les limites sont représentées par les positions extrêmes en traits mixtes de la boucle 1b. Une lame rigide 29 placée intérieurement à la virole 27 sert de butée en fin de détente de la suspension.

L'ensemble des éléments décrits ci-dessus est disposé dans un logement délimité par un carter étanche 15a du bras 15, limité par une cloison transversale 38 placée entre la cheville 10 et le moyeu 37. Ce carter est rempli d'un fluide de refroidissement approprié dans lequel sont donc plongés la lame élastique 1, l'élastomère 12 et la cheville 10 notamment, et qui peut être introduit par une canalisation 40 (Fig.1) ménagée dans une paroi du carter 15a. Un oeilleton 39 rapporté sur le carter 15a permet de vérifier le niveau du fluide de refroidissement.

Des canaux annulaires libres 13 sont ménagés dans la bande d'amortissement 12, et peuvent avoir une section par exemple tronconique comme représenté. Par ailleurs, la bande 12 contient des moyens de conduction thermique, à savoir dans l'exemple décrit, un ressort en spirale 14 de faible épaisseur transversale, placé entre les spires 1c, 1d, 1e noyé dans le matériau élastomère de la bande 12 et de préférence appliqué contre une face concave de la lame 1. Le ressort spirale 14 est de préférence positionné en regard des canaux annulaires 13, afin d'obtenir un effet technique qui sera exposé ci-après.

Les moyens de conduction de la chaleur peuvent également comprendre avantageusement une plaque métallique 26, par exemple en cuivre, placée au contact de la lame 1 et/ou de la bande 12 pour diffuser la chaleur vers le tourillon 2. Ce dernier peut lui-même comporter des canaux de circulation (non représentés) du fluide de refroidissement.

Le dispositif peut être muni de butées externes amortissantes ou franches telles que la butée 31 placée sur l'extrémité libre du bras 15. Ces butées limitent l'oscillation de ce dernier en venant en contact avec le châssis du véhicule.

Le tourillon 2 est lié au véhicule (non représenté) par l'intermédiaire d'une semelle 16 elle-même fixée par des trous 17 à des goujons (non représentés) portés par un flanc du véhicule. Des vis 18, vissées dans des trous taraudés dans le tourillon 2, assurent l'appui sur ce dernier de la semelle 16. Des pions 18' vissés dans la semelle 16 et coopérant avec des trous alésés dans le tourillon 2, bloquent celui-ci à l'angle voulu pour le fonctionnement de la suspension. Le réglage est facilité par une noix 19 vissée et piétée dans le tourillon 2, et comportant un embrèvement 20. Ce dernier peut être par exemple un six pans creux pour recevoir un outillage de mesure du couple et de l'angle du bras 15 après montage du ressort formé par les pièces 1, 12 et 14. Le tourillon 2 comporte deux épaulements 5 et 21 qui reçoivent des alésages 2 et 23 du bras 15, par l'intermédiaire de bagues de friction 24 et 25 pour constituer deux paliers d'oscillation du bras 15.

Le carter 15a peut être constitué de tout matériau soudé ou moulé. De préférence, il est en matériau composite à base de fils de carbone et de résine, de façon à présenter une masse minimale, ce qui améliore l'efficacité de la suspension du véhicule. La lame élastique 1 peut être formée d'un matériau composite de même nature, et ici adapté pour résister aux efforts de traction par la cheville 10.

On voit également sur la Fig.1 des joints d'étanchéité rotatifs 32 et 33 entre le bras 15 et le tourillon 2, le second joint 33 étant rapporté par un écrou 34 qui assujettit en outre le bras 15 sur le tourillon 2 au moyen d'une vis intermédiaire 35. D'autre part, un blindage 36 est rapporté sur l'extrémité du bras 15 opposée au moyeu 37, afin de protéger le bras contre les chocs éventuels qui peuvent survenir durant l'usage tout terrain d'un véhicule.

Le fonctionnement et les avantages techniques du dispositif de suspension qui vient d'être décrit sont les suivants.

Durant les oscillations du bras 15 et de l'élément de roulement monté sur son moyeu 37 autour de l'axe fixe constitué par le tourillon 2, et dont les limites sont déterminées par la largeur de l'ouverture 50 dans la virole 27, 28, l'élasticité de la lame 1 absorbe ces oscillations, qui peuvent de plus être amorties par la bande 12. Le matériau constituant celle-ci peut du reste ne pas être compressible, et dans ce cas la bande 12 fonctionnera alors uniquement comme butée vis-à-vis de la lame 1. Dans le cas où le matériau choisi pour la bande 12 est compressible, cette bande amortit en outre les oscillations du bras 15. Le matelas 30 en élastomère agit lors de la détente de la suspension, car ce matelas 30 est au contact de la spire externe 1c.

Dans l'exemple décrit, l'axe d'oscillation du bras 15 coïncide avec le tourillon fixe 2, car on pourrait en effet en variante prévoir que ces deux éléments soient distincts. Dans l'exemple décrit, l'extrémité externe 1b de la lame spirale 1 peut alors former une boucle en serrant la cheville 10, de sorte que la rotation du bras 15 dans le sens qui enroule la lame 1 (sens anti-horaire sur la Fig.2) exerce sur cette dernière une force de traction. Ceci a pour effet de resserrer la spirale sur elle-même et d'accentuer ainsi la compression de la bande élastomère 12 entre les spires.

La disposition en spirale de la lame élastique 1, qui est plus conductrice thermiquement que la bande d'amortissement 12, procure une grande surface d'échange relative entre ces deux éléments, et favorise par conséquent la transmission thermique.

Les canaux 13, ménagés au sein de l'élastomère ou encore latéralement, facilitent sa déformation sous charge et augmentent ainsi sa flexibilité, tout en diminuant ses contraintes. Dans le cas d'utilisation d'un liquide d'échange thermique, de tels canaux 13 améliorent le contact avec ce liquide, et par leurs variations de volume provoquent une circulation du fluide, ce qui accroît l'effet de convection.

Le ressort spirale 14, de préférence contigu aux canaux 13, coopère d'une part à l'action élastique de la suspension du véhicule dans le sens qui déroule la spirale, et d'autre part forme une butée entre les faces en vis-à-vis des spires 1c, 1d, 1e lorsque la lame 1 est enroulée au maximum sous l'effort de la suspension. Durant cet effort d'enroulement dû à l'action de la cheville 10, l'élastomère constituant la bande 12 est comprimé, et peut en outre se déformer sous la pression résultante en occupant les espaces vides constitués par les canaux 13. Dans la situation de compression maximale de la bande 12, les canaux 13 ont disparu et le ressort 14 vient en butée contre la surface convexe des spires délimitant les canaux 13.

Le matelas amortisseur 12, 30 est sujet à un échauffement interne du fait de ses déformations successives en service. Le fait de l'enfermer, selon une particularité de l'invention, à l'intérieur d'un carter étanche 15a rempli d'un liquide approprié, assure son refroidissement par convection de la chaleur dégagée jusqu'aux parois externes de ce carter 15a. Ce dernier fait avantageusement partie du bras oscillant 15 de la suspension.

Il convient de noter que le ressort 14 assure, en plus de la fonction de butée déjà mentionnée, une fonction de conduction de chaleur permettant d'accroître l'échange thermique entre la bande d'amortissement 12 et l'extérieur. Enfin, le carter étanche logé à l'intérieur du bras oscillant supprime tout encombrement de la suspension extérieurement au bras oscillant.

**Revendications**

1. Dispositif de suspension élastique et amortie d'une charge, notamment pour véhicule, comportant un bras (15) de support de la charge articulé autour d'un axe porteur (2), des moyens élastiques coopérant avec ce bras et qui comprennent une lame élastique (1) à haut module élastique formant une spirale autour d'un axe parallèle à l'axe d'oscillation (2), ainsi qu'une bande d'amortissement (12) en matériau déformable à bas module élastique et éventuellement compressible, interposée entre deux spires consécutives (1c, 1d, 1e) de la lame (1), cette dernière et la bande d'amortissement (12) étant logées dans un carter étanche (15a) du bras oscillant (15), caractérisé en ce que le carter (15a) du bras (15) est rempli d'un liquide de refroidissement.

2. Dispositif selon la revendication 1, caractérisé en ce que des canaux annulaires libres (13) sont ménagés dans la bande d'amortissement (12).

3. Dispositif selon la revendication 2, caractérisé en ce que la bande d'amortissement (12) contient des moyens de conduction thermique, comportant par exemple un ressort en spirale (14) noyé dans le matériau déformable (12), appliqué contre une face concave de la lame élastique (1), placé de préférence en regard des canaux annulaires libres (13) et coopérant avec la lame (1) pour supporter la charge.

4. Dispositif selon la revendication 3, caractérisé en ce que les moyens de conduction thermique comprennent une plaque métallique (7) en contact avec la lame (1) et/ou avec la bande d'amortissement (12).

5. Dispositif selon l'une des revendications 1 à 4, caractérisé en ce que la lame élastique (1) est logée dans une virole (27, 28) dans laquelle est ménagée une ouverture de sortie (50) de l'extrémité externe (1b) de la lame (1) et qui est garnie intérieurement d'un matelas déformable (30).

6. Dispositif selon la revendication 1, caractérisé en ce que l'axe porteur est constitué par un tourillon fixe (2) traversant le bras (15).

7. Dispositif selon la revendication 6, caractérisé en ce que l'extrémité interne (1a) de la lame (1) est fixée rigidement à l'axe porteur (2) et son extrémité externe (1b) est mécaniquement solidaire du bras (15), par exemple repliée en une boucle entourant une cheville (10) traversant le carter étanche (15a).

**Patentansprüche**

1. Federnde und dämpfende Lastaufhängungsvorrichtung, insbesondere für Fahrzeuge mit einem Tragarm (15) der Last, der um eine Trägerachse (2) gelenkig ausgebildet ist, Federeinrichtungen, die mit diesem Arm zusammenwirken und die ein Federblatt (1) mit hohem Ealstizitätsmodul aufweisen, das eine Spirale um eine zur Schwenkachse (2) parallele Achse bildet, sowie einem Dämpfungsband (12) aus verformbarem Material von geringem elastischem Modul und gegebenenfalls kompressibel, das zwischen zwei aufeinanderfolgenden Wicklungen (1c, 1d, 1e) des Blattes (1) angeordnet ist, wobei letzteres und das Dämpfungsband (12) mit einem dichten Gehäuse (15a) des schwenkbaren Arms (15) angeordnet sind, **dadurch gekennzeichnet,** daß das Gehäuses (15a) des Arms (15) mit einer Kühlflüssigkeit gefüllt ist.

2. Vorrichtung nach Anspruch 1, **dadurch gekennzeichnet,** daß freie ringförmige Kanäle (13) im Dämpfungsband (12) ausgebildet sind.

3. Vorrichtung nach Anspruch 2, **dadurch gekennzeichnet,** daß das Dämpfungsband (12) Wärmeleiteinrichtungen enthält, die beispielsweise eine Spiralfeder (14) aufweisen, die in das verformbare Material (12) eingetaucht ist, in Andruck gegen eine konkave Seite des Federbandes (1), das vorzugsweise gegenüber den freien ringförmigen Kanälen (13) angeordnet ist und mit dem Blatt (1) zum Stützen der Last zusammenwirkt.

4. Vorrichtung nach Anspruch 3, **dadurch gekennzeichnet,** daß die Wärmeleiteinrichtungen eine metallische Platte (7) in Kontakt mit dem Blatt (1) und/oder mit dem Dämpfungsband (12) aufweisen.

5. Vorrichtung nach einem der Ansprüche 1 bis 4, **dadurch gekennzeichnet,** daß das federnde Blatt (1) in einem Ringmantel (27, 28) angeordnet ist, in dem eine Ausgangsöffnung (50) des äußeren Endes (1b) des Blattes (1) ausgebildet ist, und der im Inneren mit einer biegsamen Matte (30) besetzt ist.

6. Vorrichtung nach Anspruch 1, **dadurch gekennzeichnet,** daß die Trägerachse durch einen festen Lagerzapfen (2), der durch den Arm (15) hindurchgeht, gebildet wird.

7. Vorrichtung nach Anspruch 6, **dadurch gekennzeichnet,** daß das innere Ende (1a) des Blattes (1) starr an der Trägerachse (2) befestigt ist, und sein äußeres Ende (1b) mechanisch mit dem Arm (15) verbunden ist, beispielsweise umgeschlagen in einen Ring oder eine Schleife, die einen Zapfen (10) umrundet, der das dichte Gehäuse (15a) durchsetzt.

**Claims**

1. Device for the resilient and cushioned suspension of a load, particularly for a vehicle, comprising an arm (15) for supporting the load, articulated about a bearing axle (2), resilient means interacting with this arm and comprising a resilient leaf (1) having a high modulus of elasticity and forming a spiral about an axis parallel to the axis of oscillation (2), together with a damping strip (12) of deformable material having a low modulus of elasticity, which may or may not be compressible, interposed between two consecutive turns (1c, 1d, 1e) of the leaf (1), the latter and the cushioning strip (12) being accommodated in a leaktight housing (15a) of the oscillating arm (15), characterized in that the housing (15a) of the arm (15) is filled with a cooling liquid.

2. Device according to Claim 1, characterized in that free annular channels (13) are formed in the cushioning strip (12).

3. Device according to Claim 2, characterized in that the cushioning strip (12) contains means of thermal conduction, comprising for example a spiral spring (14) embedded in the deformable material (12), applied against a concave face of the resilient leaf (1), preferably positioned opposite the free annular channels (13) and interacting with the leaf (1) to support the load.

4. Device according to Claim 3, characterized in that the thermal conduction means comprise a metal plate (7) in contact with the leaf (1) and/or with the cushioning strip (12).

5. Device according to one of Claims 1 to 4, characterized in that the resilient leaf (1) is accommodated in a hoop (27, 28) in which an outlet aperture (50) is made for the outer end (1b) of the leaf (1) and which is internally equipped with a deformable pad (30).

6. Device according to Claim 1, characterized in that the bearing axle is formed by a fixed journal (2) passing through the arm (15).

7. Device according to Claim 6, characterized in that the inner end (1a) of the leaf (1) is rigidly fixed to the bearing axle (2) and its outer end (1b) is mechanically fixed to the arm (15), for example folded back into a loop surrounding a pin (10) passing through the leakting housing (15a).

FIG. 1

EP 0 352 163 B1

FIG.2

EP 0 352 163 B1